# EUROPEAN PATENT SPECIFICATION

(11) **EP 1 882 536 B1**
(45) Date of publication and mention of the grant of the patent: **08.09.2010**
(21) Application number: 07013256.8
(22) Date of filing: 06.07.2007
(51) Int. Cl.: B22D 17/22, B29C 45/26

(54) **Die for manufacturing an eccentric for connection of furniture parts and eccentric obtained with said die**
Giessform zur Herstellung eines Exzenters zur Verbindung von Möbelstücken und mit Hilfe dieser Giessform hergestellter Exzenter
Moule pour fabriquer un système excentré pour la connexion de pièces de mobilier et système excentré obtenu à partir de ce moule

(30) Priority: 27.07.2006 IT MI20061481
(43) Date of publication of application: 30.01.2008
(73) Proprietor: Agostino Ferrari S.p.A., 24122 Bergamo (IT)
(72) Inventor: Migli, Carlo, 23900 Lecco LC (IT)
(74) Representative: Faraggiana, Vittorio

(56) References cited:
- EP-A- 0 378 118
- EP-A- 1 450 051
- GB-A- 1 174 319
- GB-A- 2 098 698
- US-A- 3 064 321

## Description

The present invention relates to an innovative mould or die for eccentrics of the type used in combination with a tie rod to make a connection between two furniture parts. The invention also relates to an eccentric made with such a die.

Known in the art is use of eccentrics of cylindrical shape to be employed in combination with a suitable tie rod for connection with furniture parts in a simple, quick and efficient manner.

The eccentric is fitted into a cylindrical seat formed in one element of a piece of furniture and on its side surface has a groove inside which the head of a tie rod is trapped, said tie rod being connected to a second element of a piece of furniture to be anchored to the first one. The tie rod is inserted in a hole in the piece of furniture the axis of which is incident on that of the seat receiving the eccentric.

The groove extends along most of the side perimeter of the eccentric, and along its longitudinal edges has undercuts with which the head of the tie rod engages in order to form a constraint in a radial direction between eccentric and tie rod.

The undercuts are spiral shaped so that a rotation of the eccentric within its seat generates a pulling action on the tie rod and, as a result, a constraint between the two furniture parts to be connected.

Provided on the flat faces of the eccentric in order to enable rotation during mounting, are cavities adapted to receive a tool such as an Allen wrench or a screwdriver.

An eccentric of this type is disclosed for exemple in EP-A-0 378 118, US 3,064,321, GB-A-2 098 698, GB-A-1 1 174 319 and EP-A-1 450 051.

The eccentric is obtained by die-casting, and is typically made of a Zn+Al+Mg alloy.

The die used to make the piece in accordance with the known art, has a closing plane perpendicular to the eccentric axis, with an opening direction parallel to this axis. This is due to the requirement of making relief cavities formed in the upper and lower faces respectively of each piece, in addition to the cavities designed to receive the tool for rotating the eccentric.

To make the opening forming the receiving groove for the tie rod head in the side surface, two side carriages are then indispensable, said carriages being movable in a direction parallel to the closing plane of the die on opposite sides of the eccentric.

Provision of two side carriages for each moulding impression of a piece involves a bulkiness imposing the number of impressions within the die to be considerably restricted, the machinery size being the same. This situation prevents a satisfactory level of productivity to be achieved in the process of manufacturing the eccentrics, which process is particularly expensive, as a limited number of pieces for each die opening/closing cycle can be made.

It is a general aim of the present invention to obviate the above mentioned drawbacks by providing a die for eccentric elements enabling an efficient and cheap production.

It is a further aim of the invention to provide an eccentric that has the same functional character as the eccentrics of the known art, but that can be manufactured in a cheaper, more efficient and productive way.

In view of the above aim, in accordance with the invention a die for manufacturing eccentrics for connection of furniture parts has been devised, said eccentrics being of the type having an almost cylindrical shape and being adapted to be inserted into a seat in a first furniture part, the eccentric having a groove on its side surface that is designed to receive a head of a tie rod connected to a second furniture part to be connected to the first one, the groove having undercuts that in use engage the head of the tie rod to form a radial constraint between tie rod and eccentric in such a way that an axial rotation of the eccentric within the seat in which it is inserted generates a pulling action on the tie rod, characterised in that the die comprises two shell halves suitable for opening with an opening direction perpendicular to an axis of the eccentric to create at least one moulding impression of an eccentric, for each eccentric each of the two shell halves forming a cavity in its side surface of such a nature as to form part of said groove, the die for each moulding impression comprising only one side carriage movable transversely of the opening direction of the die in an axial direction relative to the eccentric, suitable to form said undercuts in the groove and an axial hole in the eccentric that in use is adapted to receive a tool for rotating the eccentric.

For better explaining the innovative principles of the present invention and the advantages it offers over the known art, a possible embodiment applying said principles will be described hereinafter by way of example, with the aid of the accompanying drawings. In the drawings:
- Fig. 1 represents a perspective view of an eccentric made in accordance with the invention,
- Fig. 2 is a second perspective view of the eccentric shown in Fig. 1,
- Fig. 3 is a side view of the eccentric,
- Fig. 4 is a cross-sectional view of the eccentric, sectioned along the plane IV-IV represented in Fig. 3.

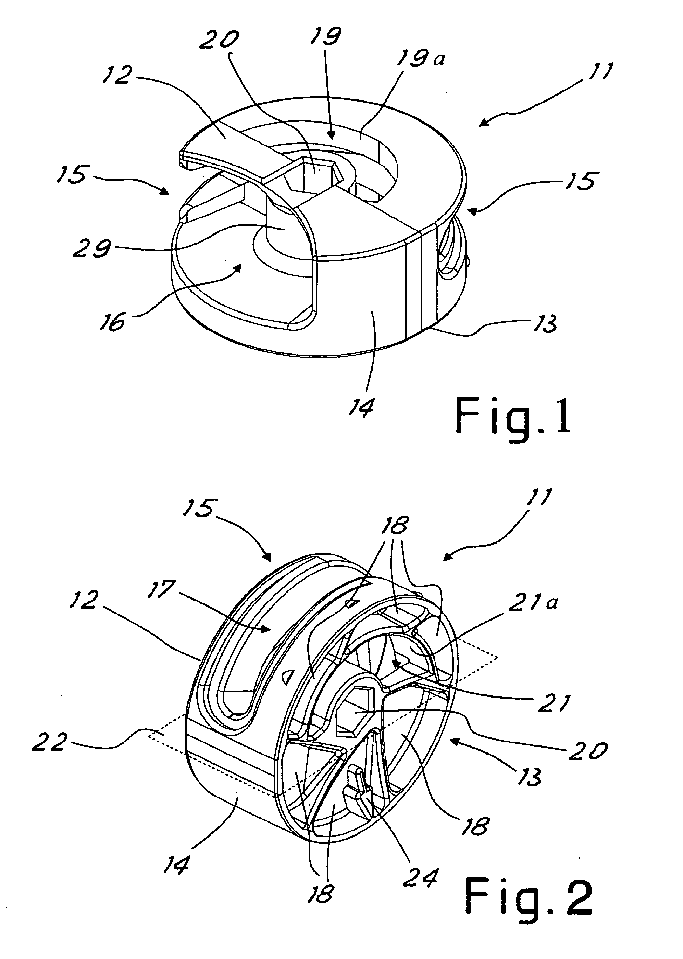

With reference to the drawings, shown in Fig. 1 is an eccentric 11 made of a Zn+Al+Mg alloy by die-casting and designed to be used in combination with a tie rod (not shown in the figure) for connecting two furniture parts.

The eccentric 11 has a substantially cylindrical shape and in use is inserted into a corresponding cylindrical seat formed in one of the two furniture parts to be connected.

The eccentric comprises a front face 12, a rear face 13 and a side surface 14.

Formed on the side surface 14 is a groove 15, in use designed to receive a tie rod head, said tie rod being connected to the second furniture part to be connected to the first one. The tie rod is made following well-known techniques in this field and is not shown in the figure, as it can be easily conceived by those skilled in the art.

The groove 15 has an enlarged portion for fitting of the tie rod head 16 and an engagement portion 17 with said head.

In the engagement portion 17 there are present undercuts 19a, 21a with respect to the radial direction with which the tie rod head engages so as to form a radial constraint between tie rod and eccentric.

Undercuts 19a, 21a are spiral shaped so that an axial rotation of the eccentric 11 within its seat in the piece of furniture generates a pulling action on the tie rod, according to known techniques in the field.

Undercut 19a is formed close to the front face 12 of the eccentric, while undercut 21a is close to the rear face 13, so that the two undercuts are on longitudinal opposite edges of the groove 15 at the engagement portion 17 thereof.

In the front face 12 of the eccentric, a discontinuity is present at portion 16 of groove 15, so as to promote insertion of the tie rod head.

A shaped axial hole 20 adapted to receive a suitable tool is provided to drive the eccentric in rotation. In the example shown, hole 20 has a hexagonal section and is suitable for reception of an Allen wrench.

An annular wall 29 of longitudinal extension is provided at the bottom of groove 15; it circumscribes the cavity forming hole 20 and connects the eccentric faces 12, 13. Formed on the rear face 13 is a plurality of relief cavities 18. A locating element 24 is disposed in one of these cavities to indicate the fitting point of the tie rod head.

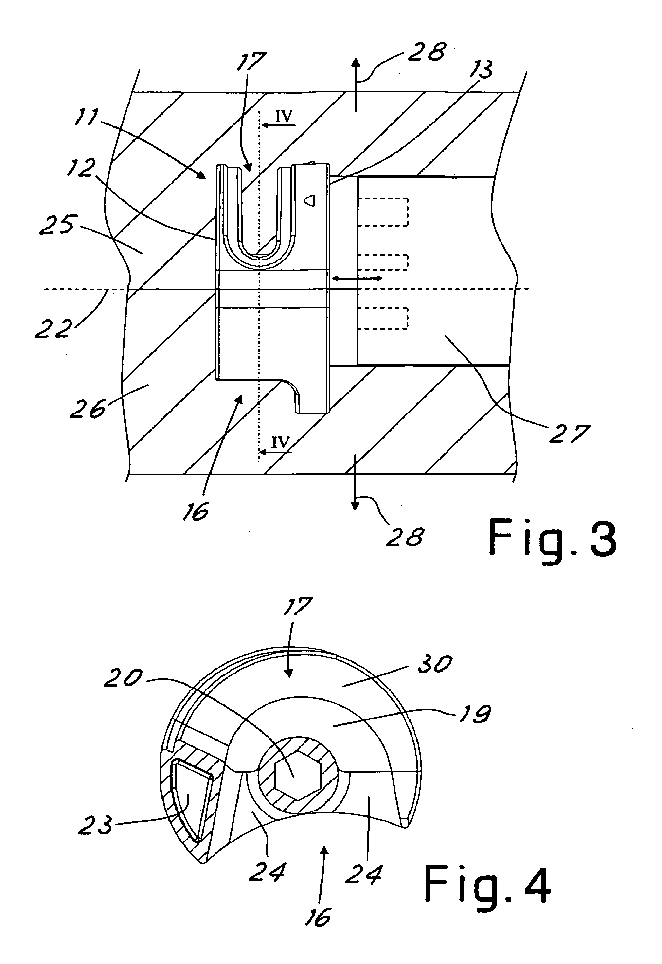

According to the invention, the eccentric 11 is formed by means of a die comprising two shell halves 25, 26 (diagrammatically shown in Fig. 3) opening in a direction 28 perpendicular to the eccentric axis, with a closing plane 22 parallel to this axis.

The cavities present in the eccentric 11 and forming undercuts relative to the opening direction of the die are all open on the same side of the eccentric 11, so that they can be obtained with only one side carriage 27 of the die (diagrammatically shown in Fig. 3).

In the embodiment shown in the figures, the cavities are all open in an axial direction, towards face 13.

Carriage 27 is movable parallel to the eccentric axis, as shown by arrows in Fig. 3, and comprises different portions integral with each other and designed to form different cavities in the piece.

Carriage 27 makes cavities 19 and 21, in alignment with each other, giving rise to the undercuts 19a and 21a. These cavities 19, 21 have semi-lunar shapes aligned with each other and are through cavities so as to form openings in the faces 12 and 13 respectively of the eccentric.

Advantageously, the undercuts 19a, 21a have a spiral shape according to an angle of about 180° so as to partly encompass the central hole 20 of the eccentric.

The cavities 19, 21 forming the two undercuts 19a, 21a are formed in one half of the eccentric in one alone of the two shell halves that is not intersected by the closing plane of the die.

Carriage 27 also creates the central hole 20 of hexagonal section as well as the cavities 18 formed in the rear face 13 of eccentric 11.

Hole 20 is a through hole so that it can receive the Allen wrench on both sides of eccentric 11.

Cavity 23 too, shown in section in Fig. 4, is made using a portion of carriage 27.

The hollow portions 24 and 30, still shown in Fig. 4, are on the contrary formed by means of the upper and lower shell halves 25, 26 of the die and carry out a peripheral opening along the side surface 14 of the eccentric forming the groove 15.

As said, all cavities 18, 19, 20, 21, 23 forming undercuts with respect to the opening direction of the die can be obtained using a laterally-movable single carriage.

This expedient allows bulkiness relating to a single forming impression to be greatly reduced as compared with the known art, where two side carriages slideable on opposite sides of the impression were necessary to make the peripheral groove extending along the side surface of the eccentric.

By forming the piece with an opening direction of the die perpendicular to an axis of the eccentric, the opening forming the groove can be obtained with the upper and lower two shell halves of the die, while the other cavities can be obtained with a single side carriage.

Due to this expedient it is possible to arrange a much greater number of impressions in the same die (each of them having a single side carriage associated therewith), thus greatly increasing the productivity of the manufacturing process of the pieces. For instance, on the impression side opposite to the carriage another impression in mirror image relationship can be disposed.

At this point it is apparent that the aims of the present invention are achieved.

In particular, with the die in accordance with the invention an eccentric has been provided for connection of furniture elements that can be manufactured by moulding in a cheap and productive manner while keeping the same functional character and the same size features as the pieces of the known art.

Also provided is a die for manufacturing eccentrics enabling the productivity of the manufacturing process to be greatly increased, the bulkiness of the production machinery being the same.

The number of pieces that can be manufactured with one die is even doubled.

Obviously, the above description of an embodiment applying the innovative principles of the present invention is given by way of example only and therefore must not be considered as a limitation of the patent rights herein claimed.

For instance, the die can comprise all the expedients of the known art such as ejectors, admission ducts, etc. not shown for the sake of simplicity but easily conceivable by those skilled in the art.

## Claims

1. A die for manufacturing eccentrics for connection of furniture parts, of the type having an almost cylindrical shape and adapted to be inserted into a seat in a first furniture part, the eccentric (11) having a groove (15) in its side surface (14) which is designed to receive a head of a tie rod connected to a second furniture part to be connected to the first one, the groove (15) having undercuts (19a, 21a) that in use engage the tie rod head to make a radial constraint between tie rod and eccentric in such a manner that an axial rotation of the eccentric within the seat into which it is inserted generates a pulling action on the tie rod, **characterised in that** the die comprises two shell halves (25, 26) adapted to open in an opening direction perpendicular to an axis of the eccentric to create at least one moulding impression of an eccentric, for each eccentric each of the two shell halves forming a cavity in the side surface (14) thereof of such a nature as to form part of said groove (15), the die for each moulding impression comprising only one side carriage (27) movable transversely of the die opening direction in an axial direction relative to the eccentric (11), suitable to form said undercuts (19a, 21a) in the groove (15) and an axial hole (20) in the eccentric that in use is adapted to receive a tool for rotating the eccentric.

2. A die as claimed in claim 1, **characterised in that** said carriage (27) also makes relief cavities (18) at a face (13) of the eccentric (11).

3. A die as claimed in claim 1, **characterised in that** it comprises a plurality of moulding impressions, only one side carriage being associated with each of them, for simultaneously moulding a plurality of eccentrics.

4. A die as claimed in claim 1, **characterised in that** said central hole (20) is a through hole.

5. A die as claimed in claim 1, **characterised in that** said undercuts (19a, 21a) designed for engagement with the tie rod head are disposed along opposite sides of the groove (15) and have a spiral shape, being formed by means of cavities (19, 21) of semi-lunar shape aligned with each other, made by the same portion of the carriage (27).

6. A die as claimed in claim 5, **characterised in that** the cavities (19, 21) of semi-lunar shape form through openings in the front and rear faces (12, 13) of the eccentric.

7. A die as claimed in claim 1, **characterised in that** the groove (15) on one side of the eccentric has a narrow portion (17) where the undercuts (19a, 21a) are formed for engagement with the tie rod head and an enlarged portion (16) for insertion of the head into the groove (15) on an opposite side of the eccentric where a discontinuity is formed in a face (12) of the eccentric.

8. An eccentric for connection of furniture parts made by means of a die as claimed in anyone of claims 1 to 7.

## Patentansprüche

1. Gießform zur Herstellung von Exzentern zur Verbindung von Möbelteilen, wobei die Exzenter von annähernd zylinderförmigem Typ und dazu ausgebildet sind, in einen Sitz in einem ersten Möbelteil eingesetzt zu werden und wobei der Exzenter (11) in seiner Seitenfläche (14) eine Nut (15) aufweist, die zur Aufnahme eines Kopfes einer Zugstange ausgebildet ist, die mit einem zweiten, mit dem ersten Möbelteil zu verbindenden Möbelteil verbunden ist und wobei die Nut (15) Hinterschneidungen (19a, 21 a) aufweist, die beim Gebrauch am Zugstangenkopf angreifen, um einen radialen Zwanglauf zwischen Zugstange und Exzenter derart zu bilden, dass eine axiale Drehung des Exzenters im Inneren des Sitzes, in welchen er eingesetzt ist, eine Zugwirkung auf die Zugstange hervorruft,
**dadurch gekennzeichnet, dass** die Gießform aus zwei Schalenhälften (25, 26) besteht, die zum Öffnen in eine senkrecht zu einer Achse des Exzenter verlaufende Öffnungsrichtung eingerichtet sind, um mindestens eine Formvertiefung eines Exzenters zu erzeugen, wobei jede der beiden Schalenhälften für jeden Exzenter in dessen Seitenfläche (14) einen Hohlraum dergestalt ausbildet, dass er einen Teil der Nut (15) bildet, wobei die Gießform für jede Formvertiefung nur einen Seitenschlitten (27) umfasst, der quer zu der Öffnungsrichtung der Gießform in axialer Richtung bezogen auf den Exzenter (11) bewegbar ist, und dazu geeignet, die Hinterschneidungen (19a, 21 a) in der Nut (15) und eine axiale Bohrung (20) in dem Exzenter zu bilden, die beim Gebrauch für das Aufnehmen eines Werkzeugs zum Drehen des Exzenters ausgebildet ist.

2. Gießform nach Anspruch 1,
**dadurch gekennzeichnet, dass** der Schlitten (27) an einer Seite (13) des Exzenters (11) ausgesparte Hohlräume (18) erzeugt.

3. Gießform nach Anspruch 1,
**dadurch gekennzeichnet, dass** sie eine Vielzahl von Formvertiefungen umfasst, wobei jeder von diesen nur ein Seitenschlitten zugeordnet ist, um gleichzeitig eine Vielzahl von Exzentern zu formen.

4. Gießform nach Anspruch 1,
**dadurch gekennzeichnet, dass** die zentrale Bohrung (20) eine Durchgangsbohrung ist.

5. Gießform nach Anspruch 1,
**dadurch gekennzeichnet, dass** die Hinterschneidungen (19a, 21 a), die zum Eingriff mit dem Zugstangenkopf ausgestaltet sind, entlang gegenüberliegender Seiten der Nut (15) angeordnet sind und eine Spiralform aufweisen, die durch halbmondförmige, miteinander fluchtende Hohlräume (19, 21) gebildet wird, welche durch denselben Abschnitt des Schlittens (27) erzeugt werden.

6. Gießform nach Anspruch 5,
**dadurch gekennzeichnet, dass** die halbmondförmigen Hohlräume (19, 21) Durchgangsöffnungen in der Vorder- und Rückseite (12, 13) des Exzenters bilden.

7. Gießform nach Anspruch 1,
**dadurch gekennzeichnet, dass** die Nut (15) an einer Seite des Exzenters einen schmalen Abschnitt (17) hat, an dem die Hinterschneidungen (19a, 21 a) zum Angriff an dem Zugstangenkopf ausgebildet sind und einen vergrößerten Abschnitt (16) zum Durchführen des Kopfes in die Nut (15) an einer gegenüberliegenden Seite des Exzenters, an der in einer Seite (12) des Exzenters ein Diskontinuität ausgebildet ist.

8. Exzenter zur Verbindung von Möbelteilen, hergestellt mittels einer Gießform nach einem der Ansprüche 1 bis 7.

## Revendications

1. Moule pour fabriquer des éléments excentriques pour le raccord de parties de mobilier, du type ayant une forme quasiment cylindrique et adaptés pour être insérés dans un siège dans une première partie de mobilier, l'élément excentrique (11) ayant une gorge (15) dans sa surface latérale (14) qui est conçue pour recevoir une tête d'une tige d'accouplement reliée à une deuxième partie de mobilier devant être reliée à la première partie, la gorge (15) ayant des découpes (19a, 21a) qui en utilisation mettent en prise la tête de tige d'accouplement pour réaliser une contrainte radiale entre la tige d'accouplement et l'élément excentrique d'une telle manière qu'une rotation axiale de l'élément excentrique dans le siège dans lequel il est inséré génère une action de traction sur la tige d'accouplement, **caractérisé en ce que** le moule comprend deux demi-coques (25, 26) adaptées pour s'ouvrir dans une direction d'ouverture perpendiculaire à un axe de l'élément excentrique pour créer au moins une impression de moulage d'un élément excentrique, pour chaque élément excentrique chacune des deux demi-coques formant une cavité dans la surface latérale (14) de celui-ci de telle nature à former une partie de ladite gorge (15), le moule pour chaque impression de moulage comprenant seulement un chariot latéral (27) mobile transversalement à la direction d'ouverture du moule dans une direction axiale par rapport à l'élément excentrique (11), approprié pour former lesdites découpes (19a, 21a) dans la gorge (15) et un orifice axial (20) dans l'élément excentrique qui en utilisation est adapté pour recevoir un outil pour faire tourner l'élément excentrique.

2. Moule selon la revendication 1, **caractérisé en ce que** ledit chariot (27) réalise également des cavités en relief (18) au niveau d'une face (13) de l'élément excentrique (11).

3. Moule selon la revendication 1, **caractérisé en ce qu'**il comprend une pluralité d'impressions de moulage, un seul chariot latéral étant associé avec chacune d'elles, pour le moulage simultané d'une pluralité d'éléments excentriques.

4. Moule selon la revendication 1, **caractérisé en ce que** ledit orifice central (20) est un orifice traversant.

5. Moule selon la revendication 1, **caractérisé en ce que** lesdites découpes (19a, 21a) conçues pour mettre en prise la tête de tige d'accouplement sont disposées le long de côtés opposés de la gorge (15) et ont une forme de spirale, formé au moyen de cavités (19, 21) en forme de demi-lune alignées l'une à l'autre, faites par la même partie du chariot (27).

6. Moule selon la revendication 5, **caractérisé en ce que** les cavités (19, 21) en forme de demi-lune forment des ouvertures traversantes dans les faces avant et arrière (12, 13) de l'élément excentrique.

7. Moule selon la revendication 1, **caractérisé en ce que** la gorge (15) sur un côté de l'élément excentrique possède une partie étroite (17) où les découpes (19a, 21a) sont formées pour mettre en prise la tête de tige d'accouplement et une partie agrandie (16) pour l'insertion de la tête dans la gorge (15) sur un côté opposé de l'élément excentrique où une discontinuité est formée dans une face (12) de l'élément excentrique.

8. Élément excentrique pour le raccord de parties de mobilier réalisé au moyen d'un moule selon l'une quelconque des revendications 1 à 7.
